(19) Europäisches Patentamt
European Patent Office
Office européen des brevets

(11) **EP 4 424 879 A1**

(12) **EUROPEAN PATENT APPLICATION**
published in accordance with Art. 153(4) EPC

(43) Date of publication:
**04.09.2024 Bulletin 2024/36**

(21) Application number: **22885941.9**

(22) Date of filing: **25.10.2022**

(51) International Patent Classification (IPC):
*C25B 9/65* (2021.01)        *C25B 9/015* (2021.01)
*C25B 15/00* (2006.01)        *C25B 9/13* (2021.01)

(52) Cooperative Patent Classification (CPC):
**C25B 9/01; C25B 9/015; C25B 9/13; C25B 9/19;
C25B 9/65; C25B 15/00; C25C 7/00; H02J 7/14;
Y02E 60/36**

(86) International application number:
**PCT/CN2022/127348**

(87) International publication number:
**WO 2023/072064 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.10.2021 CN 202111267982**

(71) Applicants:
• **China Petroleum & Chemical Corporation
Beijing 100728 (CN)**
• **Sinopec Dalian Research Institute of
Petroleum and Petrochemicals Co., Ltd.
Lushunkou District
Dalian, Liaoning 116045 (CN)**

(72) Inventors:
• **SHI, Zhentang
Dalian, Liaoning 116045 (CN)**
• **WANG, Meiwei
Dalian, Liaoning 116045 (CN)**
• **LI, Jun
Dalian, Liaoning 116045 (CN)**
• **WU, Guanlin
Dalian, Liaoning 116045 (CN)**
• **TAO, Linan
Dalian, Liaoning 116045 (CN)**
• **SUN, Jin
Dalian, Liaoning 116045 (CN)**

(74) Representative: **karo IP
karo IP Patentanwälte
Kahlhöfer Rößler Kreuels PartG mbB
Postfach 32 01 02
40416 Düsseldorf (DE)**

(54) **ELECTROLYSIS DEVICE, ELECTROLYSIS SYSTEM, AND ELECTROLYSIS METHOD FOR ALTERNATING CURRENT INDUCTION POWER SUPPLY**

(57)     The present invention provides an electrolysis device, electrolysis system, and electrolysis method for alternating current induction power supply. The electrolysis device comprises: at least one group of magnetic circuits and an electrolytic cell, wherein the magnetic circuits comprise a magnetic core on which an electromagnetic coil is wound, the magnetic core being provided outside the electrolytic cell; and the magnetic circuits are used for using an alternating current power source to generate a rotating magnetic field surrounding the electrolytic cell, the rotating magnetic field acting on an electrolyte in the electrolytic cell to generate an induction direct current, such that the electrolyte is electrolyzed. According to the electrolysis device, the electrolytic cell generates the induction direct current directly by means of an alternating current, such that alternating current and direct current conversion links are reduced, and energy loss caused by energy conversion is reduced.

FIG. 1

## Description

**Cross Reference to Related Applications**

This application claims the benefits of Chinese Patent Application No. 202111267982.7, filed on October 29, 2021, the contents of which are incorporated herein by reference.

**Field of the Invention**

The present disclosure relates to the field of electrochemistry, in particular to an electrolysis device, electrolysis system, and electrolysis method for alternating current induction power supply.

**Background of the Invention**

Electrolysis is a process in which an current is passed through an electrolyte solution or molten electrolyte (collectively referred to as "electrolyte"), and the electrolyte undergoes the redox reaction on the cathode and anode to prepare the required product. Electrolysis is widely used in industries such as chlor-alkali industry, metal smelting, electrochemical energy storage, etc., renewable energy generation-electrolysis of water to produce hydrogen is the main source of hydrogen energy in the future.

In the prior art, the power supply used for electrolysis is a low voltage, high-current direct -current power supply, which produces large resistive loss and magnetic fields. Existing grids are typically alternating current grids that provide the three-phase sine wave alternating current (regardless of harmonic contamination, etc.). If an alternating current power source is used, the electrolysis device needs to use transformers and rectifiers to reduce the voltage of the high-voltage alternating current power supply and rectify it into the direct current before it can be used for electrolysis. Thus, the prior art electrolysis technology suffers from the disadvantages of requiring an increase in the equipment cost of the rectifiers and excessive energy loss in the energy conversion process.

**Summary of the Invention**

An objective of the embodiments of the present disclosure is to provide an electrolysis device, electrolysis system, and electrolysis method for alternating current induction power supply, in the electrolysis device, an alternating current power source forms a magnetic field through an electromagnetic coil and magnetic cores, so that an electrolytic cell generates an induction current, thereby reducing the link of alternating current and direct current conversion and reducing the energy loss caused by energy conversion.

In order to achieve the above objective, an embodiment of the present disclosure provides an electrolysis device for alternating current induction power supply, including: at least one group of magnetic circuits and an electrolytic cell; wherein the magnetic circuits include a magnetic core on which an electromagnetic coil is wound, the magnetic core being provided outside the electrolytic cell; and the magnetic circuit is configured to generate a rotating magnetic field surrounding the electrolytic cell by an alternating current power source, the rotating magnetic field acting on an electrolyte in the electrolytic cell to generate an induction direct current, such that the electrolyte is electrolyzed.

Optionally, upper and lower ends of the magnetic core are connected to a pair of pole shoes adapted to the electrolytic cell; and relative movement of the magnetic field between the pair of pole shoes and the electrolyte in the electrolytic cell cuts magnetic-curve, and the direction of the magnetic-curve is non-parallel to a tangential direction of movement of the rotating magnetic field and the direction of the magnetic-curve or the tangential direction of movement of the rotating magnetic field is not perpendicular to a plane of an electrolytic cell diaphragm.

Optionally, the alternating current power source is a multi-phase sine wave alternating current, and the magnetic circuits include m × n pairs of magnetic cores, m being the number of phases of the alternating current power source, and n being an integer not less than 1.

Optionally, the alternating current power source is a three-phase sine wave alternating current, and the magnetic circuits include 3n pairs of magnetic cores, and a phase line of the three-phase sine wave alternating current is connected to one end of the electromagnetic coil, and the electromagnetic coil is wired in a star or triangle manner.

Optionally, the electrolytic cell is an annular electrolytic cell; and the electrolytic cell includes an electrolytic cell diaphragm, an outlet pipeline for an electrolysis product and a replenishment pipeline for the electrolyte; the electrolytic cell diaphragm serves to separate the electrolyte into a catholyte and an anolyte.

Optionally, the catholyte and anolyte are provided with a cathode plate and an anode plate, respectively; and an electrical circuit between the cathode plate and the anode plate is shorted.

Optionally, the electrolytic cell includes a plurality of mutually independent sub-cavities placed in an annular shape.

Optionally, an electrolytic cell diaphragm, a cathode plate, and an anode plate are disposed in each of the sub-cavities.

Optionally, the control unit includes a monitoring assembly and a processing unit; the monitoring assembly is configured to monitor an electrolysis speed of the electrolyte; the processing unit is configured to control an current of the electromagnetic coil according to the electrolysis speed of the electrolyte, adjust magnetic induction intensity of the rotating magnetic field by controlling the current of the electromagnetic coil, and control a frequency of the current of the electromagnetic coil according to the electrolysis speed of the electrolyte for controlling a rotation speed of the rotating magnetic field.

In another aspect, the present disclosure provides an electrolysis system for alternating current induction power supply, wherein, the electrolysis system includes an alternating current power source and the electrolysis device for alternating current induction power supply mentioned above.

In another aspect, the present disclosure provides an electrolysis method for alternating current induction power supply, wherein, the electrolysis method uses the electrolysis system for alternating current induction power supply mentioned above, and includes: connecting the alternating current power source to the magnetic circuits, generating a rotating magnetic field surrounding the electrolytic cell by the magnetic circuits, and making the rotating magnetic field act on an electrolyte in the electrolytic cell to generate an induction direct current, such that the electrolyte is electrolyzed.

The present disclosure is an electrolysis device for alternating current induction power supply, including: at least one group of magnetic circuits and an electrolytic cell; wherein the magnetic circuits include a magnetic core on which an electromagnetic coil is wound, the magnetic core being provided outside the electrolytic cell; and the magnetic circuit is configured to generate a rotating magnetic field surrounding the electrolytic cell, the rotating magnetic field acting on an electrolyte in the electrolytic cell to generate an induction direct current, such that the electrolyte is electrolyzed. The electrolysis device directly generates an induction direct current from an electrolytic cell by an alternating current to directly produce an electrolysis process, which reduces the energy loss caused by alternating current-direct current rectification.

Other features and advantages of embodiments of the present disclosure will be described in detail in the Detailed Description section that follows.

**Brief Description of Drawings**

The accompanying drawings are included to provide a further understanding of embodiments of the disclosure and constitute a part of this specification, and together with the detailed description below serve to explain, but not to limit, embodiments of the disclosure. In the accompanying drawings:

FIG. 1 is a structural schematic diagram of the electrolysis device for alternating current induction power supply according to the present disclosure;
FIG. 2 is a single side cross-sectional induction potential schematic diagram of the electrolysis device for alternating current induction power supply according to the present disclosure;
FIG. 3 is a schematic top view of the electrolytic cell induction potential of the electrolysis device for alternating current induction power supply according to the present disclosure;
FIG. 4 is a schematic diagram of the wiring of the three-phase alternating current power source to the star-connected electromagnetic coils of the present disclosure;
FIG. 5 is a schematic diagram of the arrangement of a plurality of sub-cavities of the electrolysis device for alternating current induction power supply according to the present disclosure; and
FIG. 6 is a schematic diagram of the wiring of a single-phase alternating current power source to the star-connected electromagnetic coils via capacitive phase splitting of the present disclosure.

Description of reference signs

11-magnetic core circuit;
12-annular electrolytic cell;
13-three-phase alternating current power source;
101-electromagnetic coil;
102-magnetic core;
112-first pole shoe;
113-second pole shoe;
121-electrolytic cell diaphragm;
122-cathode plate;
123-anode plate; and
201-sub-cavity.

**Detailed Description of the Embodiments**

A detailed description of embodiments of the disclosure will now be described with reference to the accompanying drawings. It should be understood that the specific embodiments described herein are merely illustrative and explanatory of the embodiments of the present disclosure, and are not intended to limit the embodiments of the present disclosure.

In the prior art, in the working principle of the electrolytic cell, typically, an alternating current power source plus a rectifier is used to supply a direct current to the two electrode plates in an electrolytic cell to cause an electrical potential and current to be generated in the electrolyte on both sides of the electrolytic cell membrane to drive ion movement, thereby causing electrolysis of the electrolyte. However, the structure of the electrolysis device in the prior art is too complex and the energy loss is large.

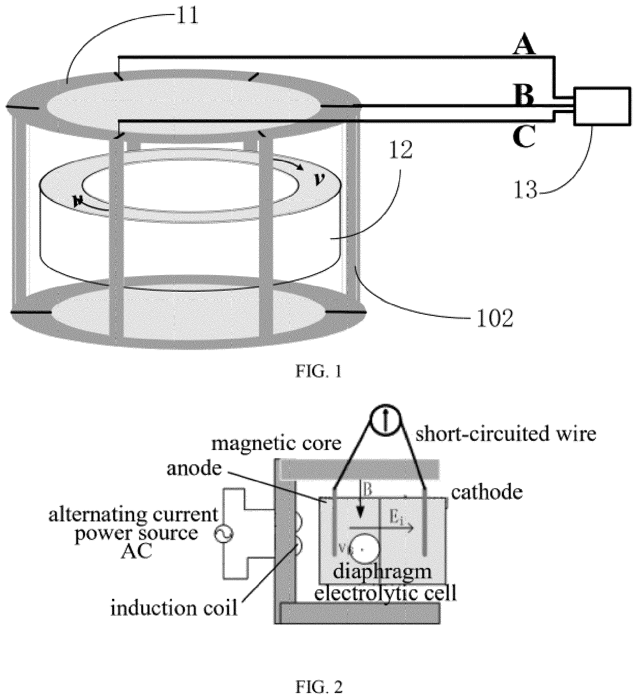

In order to solve the above problem, the present disclosure proposes an electrolysis device for alternating current induction power supply, and FIG. 1 is a structural schematic diagram of the electrolysis device for alternating current induction power supply according to the present disclosure; as shown in FIG. 1, the FIG. 1 is a structural schematic diagram of the electrolysis device for alternating current induction power supply includes: at least one group of magnetic circuits, preferably magnetic core circuits 11, and an electrolytic cell; the magnetic circuits include magnetic cores 102 on which electromagnetic coils 101 are wound, the magnetic cores 102 being provided outside the electrolytic cell. Preferably, the electrolytic cell is an annular electrolytic cell 13. In use, the electromagnetic coil 101 is connected to an alternating current power source and the magnetic circuit is configured to generate a rotating magnetic field surrounding the electrolytic cell by an alternating current power source, the rotating magnetic field acting on an electrolyte in the electrolytic cell to generate an induction direct current, such that the electrolyte is electrolyzed. The electrolysis device of the present disclosure does not need to be provided with a direct current power source, but generates an induction direct current potential and current directly in the electrolyte of the electrolytic cell by the alternating current power source 13, thereby electrolyzing the electrolyte.

The electrolytic cell is an annular electrolytic cell 12; and the electrolytic cell includes an electrolytic cell diaphragm 121, an outlet pipeline for an electrolysis product and a replenishment pipeline for the electrolyte; the electrolytic cell diaphragm 121 serves to separate the electrolyte into a catholyte and an anolyte; the catholyte and anolyte are provided with a cathode plate 122 and an anode plate 123, respectively; and an electrical circuit between the cathode plate 122 and the anode plate 123 is shorted. In particular, the annular electrolytic cell 12 is injected with an electrolyte; the annular electrolytic cell 12 includes an electrolytic cell membrane 121, an outlet pipeline for an electrolysis product (not shown in the figures) and a replenishment pipeline for the electrolyte (not shown in the figures), and preferably, the electrolytic cell diaphragm is used for dividing the annular electrolytic cell into an anode chamber in an inner ring and a cathode chamber in an outer ring.

The magnetic circuits 11 include a plurality of magnetic cores 102 wound with electromagnetic coils 101; the magnetic cores 102 are disposed outside the annular electrolytic cell 12, and a pair of pole shoes (i.e., a first pole shoe 112 and a second pole shoe 113) adapted to the annular electrolytic cell 12 are connected to the upper and lower ends of the magnetic cores 102.

A pair of pole shoes adapted to the electrolytic cell are connected to the upper and lower ends of the magnetic cores, and the alternating current power source 13 is connected to the electromagnetic coils 101 for generating a rotating magnetic field between the pair of pole shoes; the rotating magnetic field causes an induction direct current to be generated in the electrolytes on the two sides of the electrolytic cell diaphragm 121. In particular, relative movement of the magnetic field between the pair of pole shoes and the electrolyte within the electrolytic cell cuts magnetic-curve, and the direction of the magnetic-curve is non-parallel to a tangential direction of movement of the rotating magnetic field and the direction of the magnetic-curve or the tangential direction of movement of the rotating magnetic field is not perpendicular to a plane of an electrolytic cell diaphragm.

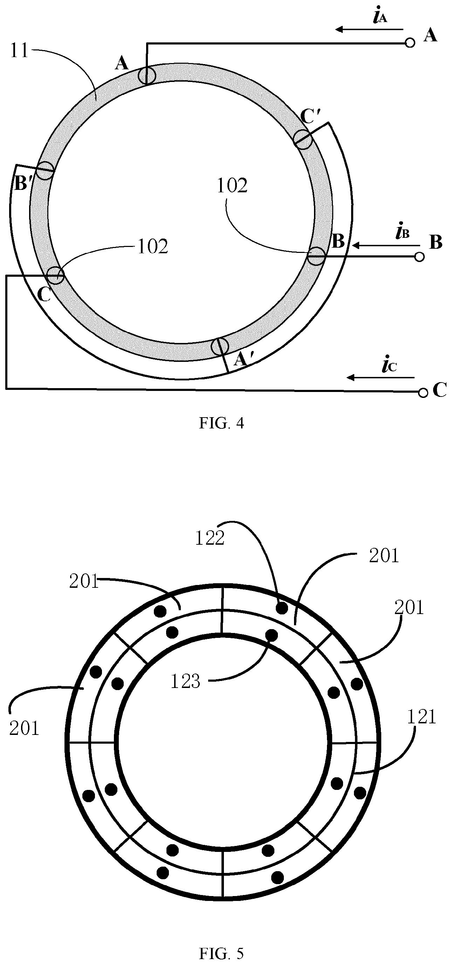

The magnetic circuits include m × n pairs of magnetic cores, m being the number of phases of the alternating current, and n being an integer not less than 1. Preferably, the alternating current power source is a three-phase alternating current, the magnetic circuits include 3n pairs of magnetic cores, and the phase line of the three-phase alternating current power source is connected to one end of the electromagnetic coil, and the electromagnetic coils are wired in a star or triangle manner, as shown in FIG. 4.

Specifically, referring to the principle of forming a rotary magnetic field (which may also be referred to as a rotating magnetic field) in a motor, a plurality of magnetic cores 102 wound with the electromagnetic coils 101 are installed outside the annular electrolytic cell 12, and after the alternating current power source 13 is turned on, a continuously rotating magnetic field (i.e., a rotating magnetic field) having a circular trajectory is generated by the pair of pole shoes respectively provided at the upper and lower ends of the annular electrolytic cell 12; since the electrolyte in the annular electrolytic cell 12 is itself stationary, but the magnetic field in which it is placed is rotating, the continuously rotating magnetic field also causes relative movement of the electrolyte in the annular electrolytic cell 12 with respect to the magnetic field between the pair of pole shoes that cuts the magnetic-curve, an induction direct current is thus generated in the electrolyte, which in turn causes electrolysis of the electrolyte. According to a preferred embodiment, relative movement of the magnetic field between the pair of pole shoes and the electrolyte in the electrolytic cell cuts the magnetic-curve, and the direction of the magnetic-curve is perpendicular to a tangential direction of movement of the rotating magnetic field and the direction of the magnetic-curve or the tangential direction of movement of the rotating magnetic field is parallel to a plane of an electrolytic cell diaphragm, so as to maximize the generated induction potential. The cathode and anode of the electrolytic cell should be shorted outside the magnetic field to ensure the formation of the induction current.

In practice, as shown in FIG. 2, the cross-section of the annular electrolytic cell 12 may be rectangular; in addition, the annular electrolytic cell 12 may also be annular in cross-section; the electrolyte in the annular electrolytic cell 12 may be electrolyzed water or an ionic liquid electrolyte. The electrolyte in the annular electrolytic cell 12 needs to be divided into a cathode chamber and an anode chamber by the electrolytic cell diaphragm 121; the direction of the electrolytic cell diaphragm 121 needs to be adapted to the pair of pole shoes of the magnetic core circuits 11, that is, after the electrolytic cell diaphragm 121 divides the annular electrolytic cell 12 into an anode chamber and a cathode chamber, one or more pairs of opposing pole shoes are positioned on the anode chamber side and the cathode chamber side, respectively, so that the magnetic-curve of the magnetic field between the pairs of pole shoes are cut by the electrolyte in the annular electrolytic cell 12 when the magnetic field rotates along the pair of pole shoes.

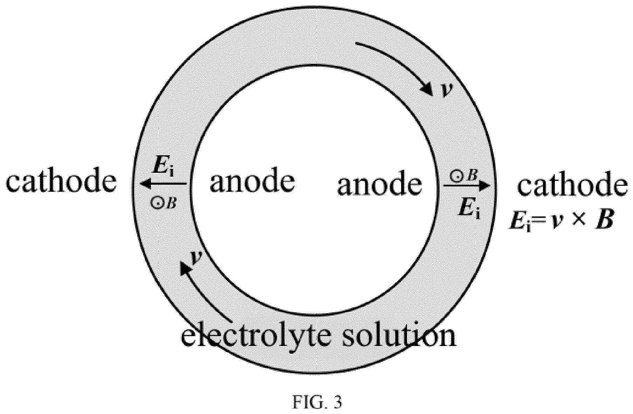

In particular, as shown in FIG. 3, when the magnetic field rotates along the pair of pole shoes, the electrolyte within the annular electrolytic cell 12 moves relative to the magnetic field (magnetic induction intensity B) between the pair of pole shoes at a relative velocity v and perpendicular to the magnetic-curve, and since the electrolyte is electrically conductive, an induction direct current electric field $E_i$ is generated in the electrolyte:

$$\dot{E}_1 = \vec{v} \times \dot{B}$$

Under the influence of the induction electric field $E_i$, cations migrate towards the cathode and anions migrate towards the anode in the electrolyte, resulting in a current density J of:

$$J = \gamma E_i$$

The electrolyte in the annular electrolytic cell 12 is electrolytically reacted at the cathode and the anode, respectively. The anode and cathode are connected by wires of an external circuit to form a current loop so as to avoid the voltage rise caused by charge accumulation. In contrast to the external direct current power supply of the prior art, the electric field in the embodiment of the present disclosure is induced in the electrolyte, while the prior art is externally applied by the direct current power supply.

Further, in order to be able to control the flow rate of the electrolyte replenishment solution, in an embodiment of the present disclosure, the electrolyte replenishment pipeline is further provided with a pipeline booster pump. As shown in FIG. 5, the inner cavity of the annular electrolytic cell 12 in the embodiment of the present disclosure may further include a plurality of mutually independent sub-cavities 201; each sub-cavity 201 is provided with an electrolytic cell diaphragm 121, a cathode plate 122, and an anode plate 123; thus, each sub-cavity can be individually used as a sub-electrolytic cell. It should be noted that the number and size of the sub-cavities in the embodiment of the present disclosure can be set according to needs by those skilled in the art and are not specifically limited here.

Further, in an embodiment of the present disclosure, a control unit may be further included; the control unit includes a monitoring assembly (detecting the electrolysis current as shown in the figure by an ammeter A) and a processing unit; the monitoring assembly is used for monitoring an electrolysis reaction speed of the electrolyte; the processing unit is used for generating a control command according to the electrolysis reaction speed; the control command is used to control the magnetic induction intensity and/or the rotation speed of the electromagnetic coil and the rotating magnetic field, to control the induction direct current potential and/or the induction direct current within the annular electrolytic cell, and finally achieve the purpose of controlling the electrolytic reaction speed.

In the embodiment of the present disclosure, the electrolyte in the annular electrolytic cell 12 can be electrolyzed water, so that the electrolytic device in the embodiment of the present disclosure can be applied to hydrogen production by renewable energy, that is, hydrogen production by electrolyzing water is directly realized by alternating current of an alternator driven by a prime mover such as a wind turbine.

Embodiment One

In the embodiment of the present disclosure, when the alternating current power source 13 is a three-phase alternating current, the structure of the magnetic core circuits 11 is as follows: there are 3n pairs of magnetic cores 102 wound with the electromagnetic coils 101 (i.e., the number of the magnetic core pairs is a multiple of 3, such as 6, 12, or 18, etc.); each pair of magnetic cores 102 is arranged concentrically with respect to the annular electrolytic cell 12, and the three electromagnetic coils 101 respectively connected to the three phases of the alternating current power source 13 each occupy an electrical angle of 2/3 $\pi$.

Specifically, taking n = l as an example, the number of magnetic cores 102 is now 3 pairs, for a total of 6; the 6 magnetic cores 102 are equidistantly disposed on a circle outside the annular electrolytic cell 12, and three (every other electromagnetic coil) of the 6 electromagnetic coils 101 are served as power source interfaces, i.e., the three electromagnetic coils 101 are respectively connected with three phases of the alternating current power source 13; in the pair of pole shoes (i.e., the first pole shoe 112 and second pole shoe 113) adapted with the annular electrolytic cell 12; the first pole shoe 112 is above the annular electrolytic cell 12 and the second pole shoe 113 is below the annular electrolytic cell 12. When the three-phase alternating current is switched on to the electromagnetic coils 101, a circular rotating magnetic field is formed between the pole shoes (that is, at the position of the annular electrolytic cell 12). The rotating magnetic field rotates relative to the stationary annular electrolytic cell 12, causing the electrolyte to passively cut the magnetic-curve, thus generating the potential and current between the electrolytes on both sides of the electrolytic cell diaphragm, and then electrolyzing the electrolyte.

The three-phase alternating current power source and the three-phase coils form an annular rotating magnetic field, the three-phase electromagnetic coil and the magnetic core each occupy an electrical angle of 2/3 $\pi$, and an inward rotating magnetic field is formed through conversion by an iron core, the magnetic-curve are directed from inside to outside, and the magnetic induction intensity B = E/(4.44 fNS); f is the frequency of the power supply, E is the electromotive force of the coil, S is the cross-sectional area of the conductor (e.g., the iron core) encircled, and N is the number of turns.

The principle of the embodiment of the present disclosure is similar to a three-phase motor, and the electromagnetic field synthesized by connecting the electromagnetic coils and the magnetic cores in a reverse phase sequence to the three-phase symmetrical power supply will rotate counterclockwise. The linear velocity v is expressed as follows:

$$v = 2\pi rn, \quad n = 60f/p,$$

wherein f is the power supply frequency, r is the coil radius, p is the number of coil (magnetic pole) pole pairs, and n is the rotation speed.

In the embodiment of the present disclosure, the electrolytic cell diaphragm 121 may be provided to separate the electrolytic cell into an anode chamber on the side of the annular inner wall of the annular electrolytic cell 12 and a cathode chamber on the side of the annular outer wall of the annular electrolytic cell 12 (as shown in FIG. 1); furthermore, depending on the direction of rotation of the magnetic core circuits 11, it is also possible to divide the electrolytic cell into a cathode chamber on the side of the annular inner wall of the annular electrolytic cell 12 and an anode chamber on the side of the annular outer wall of the annular electrolytic cell 12; at this point, in order to adapt the pair of pole shoes to the electrolytic cell diaphragm 121, the structure of the magnetic core circuits 11 may be set as follows:

the upper and lower ends of the magnetic cores 102 are provided with one or more pairs of pole shoes (i.e., a first pole shoe 112 and a second pole shoe 113), respectively; an annular electrolytic cell 12 is located between the pair of pole shoes. Preferably, the outer edge of the pair of pole shoes fits the outer edge of the annular electrolytic cell 12.

The magnetic field B applied by the magnetic core circuits 11 is perpendicular to the electrolytic cell, the rotation of which can effect magnetic field rotation. The magnetic induction intensity of the magnetic core circuits 11 in the electrolytic cell is B, the rotational linear velocity is v; since the electrolyte is relatively stationary and the magnetic field is relatively moving, the v direction in the calculation formula of the induction electric field is opposite to the direction of movement of the magnetic field. Taking FIG. 3 as an example, the induction electric field is directed from the inner ring to the outer ring, so that the side of the annular inner wall of the annular electrolytic cell 12 is the anode chamber of the electrolytic cell, and the side of the annular outer wall is the cathode chamber of the electrolytic cell; that is, for the annular electrolytic cell 12, as shown in FIG. 2, the inner side produces an anodic reaction and the outer side produces a cathodic reaction.

It should be noted that the specific implementation modes and technical effects of the electrolysis device for alternating current induction power supply in the embodiments of the present disclosure can also refer to the electrolysis device for alternating current induction power supply corresponding to the embodiments, and will not be described in detail herein.

In addition, the alternating current power source may use a multi-phase power supply with a phase number being a multiple of 3, or a single-phase alternating current power source may be used to form a multi-phase power supply through a power electronic converter, which is matched with a multi-phase electromagnetic coil to form a rotating magnetic field. Alternatively, when a single-phase power supply is used to form a two-phase power supply via inductive splitting, the rotating magnetic field formed by the electromagnetic coils will have an elliptical shape, so it is necessary to optimize the shape of the electrolytic cell by calculation.

Embodiment Two

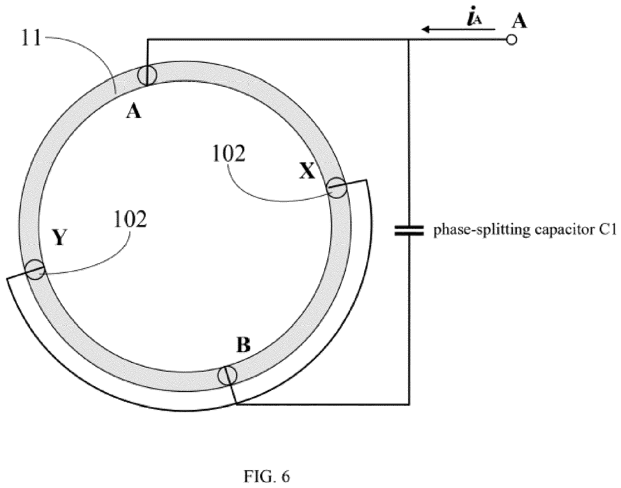

On the basis of Embodiment One, preferably, in the embodiment of the present disclosure, as shown in FIG. 6, when the alternating current power source 13 is a single-phase alternating current, the alternating current power source 13 further includes a phase splitter for generating a second phase (specifically, a capacitor phase splitter, an inductor phase splitter, or a phase splitter including a converter, etc.). At this time, the structure of the excitable magnetic circuits 11 is as follows:

there are 2n pairs of magnetic cores 102 wound with the electromagnetic coils; each pair of magnetic cores 102 is concentric to the annular electrolytic cell 12, and the two electromagnetic coils 101 connected to the two phases of the alternating current power source 13 each occupy an electric angle of $\pi$ to form a nearly circular rotating magnetic field.

Specifically, taking n = l as an example, in this case, there are 2 pairs of magnetic cores 102, a total of 4; the four magnetic cores 102 are equidistantly disposed on a circle outside the annular electrolytic cell 12, and two (every other electromagnetic coil) of the four electromagnetic coils 101 are taken as the power source interfaces, i.e., the two electromagnetic coils 101 are respectively connected with two phases of the alternating current power source 13; in the pair of pole shoes (i.e., first pole shoe 112 and second pole shoe 113) adapted with the annular electrolytic cell 12; the first pole shoe 112 is above the annular electrolytic cell 12 and the second pole shoe 113 is below the annular electrolytic cell 12; when the electromagnetic coils 101 turn on the two-phase alternating current, a circular rotating magnetic field is formed between the pole shoes (that is, the position of the annular electrolytic cell 12). The rotating magnetic field rotates relative to the stationary annular electrolytic cell 12, which makes the electrolyte passively cut the magnetic-curve, thus generating the potential and current between the electrolytes on both sides of the electrolytic cell diaphragm, and then electrolyzing the electrolyte.

Similar to a single-phase alternator capable of forming a split-phase power supply, after the second phase is generated by a phase-splitting element (such as a phase-splitting capacitor, a phase-splitting resistor or a phase-splitting inductor or a converter, the embodiment of the disclosure takes the phase-splitting capacitor as an example), the two phases of the single-phase alternating current power supply can form a circular rotating magnetic field after being connected with two electromagnetic coils for power supply, and the two-phase electromagnetic coil and magnetic core each occupy an electrical angle of $\pi$ (i.e., four magnetic cores form a square, the diagonals of the square are perpendicular to each other, and the two electromagnetic coils connected diagonally are respectively connected with the two phases of the single-phase alternating current power supply), and an inward rotating magnetic field is formed through conversion by an iron core, the magnetic-curve are directed from inside to outside, and the magnetic induction intensity B = E/(4.44 fNS); f is the frequency of the power supply, E is the electromotive force of the coil, S is the cross-sectional area of the conductor (e.g., the iron core) encircled, and N is the number of turns.

The split-phase power supply is connected with the electromagnetic coils and the magnetic cores in a reverse phase sequence, i.e., the capacitively-phase-split coils are placed in the counterclockwise orientation of the main coil, and the resultant electromagnetic field will rotate counterclockwise, and the linear velocity v is expressed as follows:

$$v = 2\pi rn$$

$$n = 60f/p$$

wherein f is the power supply frequency, r is the coil radius, P is the number of coil pole pairs, and n is the rotation speed.

It should be noted that in the embodiment of the disclosure, when using a single-phase power supply, it is necessary to calculate the turns of the phase splitting element and the two electromagnetic coils, so as to form a better annular magnetic field close to a perfect circle (i.e., a rotating magnetic field).

The theoretical induction electromotive force is: E = Blv = 2V.

The experimental device is: magnetic induction intensity B, coil ampere turns An, electrolytic cell length 1, electrolytic cell diameter d, rotation speed v, and number of pole pairs p:

$$B = \mu \, In = 0.1T;$$

$$\boldsymbol{l} = \pi \, d = 0.2m;$$

$$v = pfl = 100m/s;$$

$$p = 10 \circ$$

To sum up, the experimental data are the same as the theoretical calculation.

It should be noted that the specific implementation mode and technical effects of the electrolysis device for alternating current induction power supply in the embodiment of the present disclosure can also refer to the electrolysis device for alternating current induction power supply according to Embodiment One, and will not be described in detail here.

The electrolysis device and electrolysis system for alternating current induction power supply provided by the present disclosure can be applied to a variety of industries utilizing electrolysis, including but not limited to electrolysis of aluminum, electrolysis of brine, electrolysis of water, and the like.

The present disclosure also provides an electrolysis device for alternating current induction power supply, including an alternating current power source, magnetic core circuits and an annular electrolytic cell; the annular electrolytic cell is filled with an electrolyte; the annular electrolytic cell includes an electrolytic cell membrane, an outlet pipeline for an electrolysis product and a replenishment pipeline for the electrolyte; the electrolytic cell diaphragm serves to separate the electrolyte into a cathode chamber and an anode chamber; the cathode chamber and the anode chamber are provided with a cathode plate and an anode plate, respectively; an electrical circuit between the cathode plate and the anode plate is shorted; the magnetic core circuits include a plurality of magnetic cores wound with electromagnetic coils; the magnetic cores are disposed outside the annular electrolytic cell and the magnetic cores have a pair of pole shoes connected to the annular electrolytic cell at upper and lower ends thereof; the alternating current power source is connected to the electromagnetic coils for generating a rotating magnetic field between the pair of pole shoes; the rotating magnetic field causes an induction direct current to be generated between the electrolytes on both sides of the electrolytic cell diaphragm.

Preferably, when the alternating current power source is a three-phase alternating current, the structure of the magnetic core circuits is as follows: there are 3n pairs of magnetic cores wound with the electromagnetic coils; each pair of the magnetic cores are arranged concentrically with respect to the annular electrolytic cell, and the three electromagnetic coils respectively connected with the three phases of the alternating current power supply each occupy an electrical angle of 2/3 $\pi$. Preferably, when the alternating current power supply is a single-phase sine wave alternating current, the alternating current power supply also includes a phase splitting capacitor for generating a second phase; the structure of the magnetic core circuits is as follows: there are 2n pairs of magnetic cores wound with the electromagnetic coils; each pair of the magnetic cores are arranged concentrically with respect to the annular electrolytic cell, and the two electromagnetic coils respectively connected with the two phases of the alternating current power supply each occupy an electrical angle of $\pi$.

Preferably, the electrolytic cell diaphragm is adapted to divide the annular electrolytic cell into an anode chamber in an inner ring and a cathode chamber in an outer ring. Preferably, the electrolyte replenishment pipeline further includes a pipeline booster pump. Preferably, the inner cavity of the annular electrolytic cell includes a plurality of mutually independent sub-cavities; an electrolytic cell diaphragm, a cathode plate, and an anode plate are disposed in each of the sub-cavities. Preferably, the electrolyte includes water or an ionic liquid electrolyte.

Preferably, a control unit is further included; the control unit includes a monitoring assembly and a processing unit; the monitoring assembly is used for monitoring an electrolysis reaction speed of the electrolyte; the processing unit is used for generating a control command according to an electrolysis reaction speed; the control command is used to control the magnetic induction intensity and/or rotation speed of the electromagnetic coils and magnetic cores to control the induction direct current potential and/or induction direct current within the annular electrolytic cell. In another aspect of the present disclosure, there is also provided an electrolysis system for alternating current induction power supply, including a prime mover and the electrolysis device for alternating current induction power supply described above.

The present disclosure also provides an electrolysis method for alternating current induction power supply, the electrolysis method utilizes the electrolysis system for alternating current induction power supply described above, and includes: the alternating current power source is connected to the magnetic circuits, a rotating magnetic field surrounding the electrolytic cell is generated by the magnetic circuits, and the rotating magnetic field acts on an electrolyte in the electrolytic cell to generate an induction direct current, such that the electrolyte is electrolyzed.

It should be noted that the specific implementation modes and technical effects of the electrolysis system and method for alternating current induction power supply in the embodiments of the present disclosure can refer to the electrolysis device for alternating current induction power supply according to Embodiment One, and will not be described in detail herein.

Optional implementation modes of embodiments of the present disclosure are described in detail above in conjunction with the accompanying drawings, however, the embodiments of the present disclosure are not limited to the specific details of the embodiments described above, and many simple variations can be made to the technical solutions of the embodiments of the present disclosure within the scope of the technical solution of the embodiments of the present disclosure, which all fall within the protection scope of the embodiments of the present disclosure.

It is further noted that the specific technical features described in the above specific embodiments can be combined in any suitable manner without contradiction. In order to avoid unnecessary repetition, embodiments of the present disclosure are not further described with respect to the various possible combinations.

It also needs to be noted that, the terms "includes," "including," or any other variation thereof, are intended to cover a non-exclusive inclusion, so that a process, method, commodity or equipment that includes a set of elements includes not only those elements but also other elements that are not explicitly listed or are inherent in such a process, method, commodity or equipment. In the absence of further limitations, the elements defined by the phrase "include an..." do not exclude the existence of other identical elements in the process, method, commodity or equipment in which the elements are included.

The above are only embodiments of the present application, and are not used to limit the present application. To those skilled in the art, various modifications and variations may be made to the present application. Any modifications, equivalents, modifications, etc. made within the spirit and principles of this application shall be included within the scope of the claims herein.

**Claims**

1. An electrolysis device for alternating current induction power supply, comprising:

   at least one group of a magnetic circuit and an electrolytic cell;
   wherein the magnetic circuit comprises a magnetic core on which an electromagnetic coil is wound, the magnetic core being provided outside the electrolytic cell; and
   the magnetic circuit is configured to generate a rotating magnetic field surrounding the electrolytic cell by an alternating current power source, the rotating magnetic field acting on an electrolyte in the electrolytic cell to generate an induction direct current, such that the electrolyte is electrolyzed.

2. The electrolysis device according to claim 1, wherein

   upper and lower ends of the magnetic core are connected to a pair of pole shoes adapted to the electrolytic cell; and
relative movement of the magnetic field between the pair of pole shoes and the electrolyte in the electrolytic cell cuts magnetic-curve, and the direction of the magnetic-curve is non-parallel to a tangential direction of movement of the rotating magnetic field and the direction of the magnetic-curve or the tangential direction of movement of the rotating magnetic field is not perpendicular to a plane of an electrolytic cell diaphragm.

3. The electrolysis device according to claim 1, wherein,
the alternating current power source is a multi-phase sine wave alternating current, and the magnetic circuits comprise m × n pairs of magnetic cores, m being the number of phases of the alternating current power source, and n being an integer not less than 1.

4. The electrolysis device according to claim 1 or 2, wherein
the alternating current power source is a three-phase sine wave alternating current, and the magnetic circuits comprise 3n pairs of magnetic cores, and phase lines of the three-phase sine wave alternating current are connected to one end of the electromagnetic coil, and the electromagnetic coil is wired in a star or triangle manner.

5. The electrolysis device according to any one of claims 1-4, wherein,

the electrolytic cell is an annular electrolytic cell; and
the electrolytic cell comprises an electrolytic cell diaphragm, an outlet pipeline for an electrolysis product and a replenishment pipeline for the electrolyte; the electrolytic cell diaphragm serves to separate the electrolyte into a catholyte and an anolyte.

6. The electrolysis device according to claim 5, wherein,

the catholyte and anolyte are provided with a cathode plate and an anode plate, respectively; and
an electrical circuit between the cathode plate and the anode plate is shorted.

7. The electrolysis device according to claim 5, wherein,
the electrolytic cell comprises a plurality of mutually independent sub-cavities placed in an annular shape.

8. The electrolysis device according to claim 7, wherein

an electrolytic cell diaphragm, a cathode plate, and an anode plate are disposed in each of the sub-cavities.

9. The electrolysis device according to any one of claims 1-8, further comprising a control unit;

the control unit comprises a monitoring assembly and a processing unit;
the monitoring assembly is configured to monitor an electrolysis speed of the electrolyte;
the processing unit is configured to control an current of the electromagnetic coil according to the electrolysis speed of the electrolyte, adjust magnetic induction intensity of the rotating magnetic field by controlling the current of the electromagnetic coil, and control a frequency of the current of the electromagnetic coil according to the electrolysis speed of the electrolyte for controlling a rotation speed of the rotating magnetic field.

10. An electrolysis system for alternating current induction power supply, wherein, the electrolysis system comprises an alternating current power source and the electrolysis device for alternating current induction power supply according to any one of claims 1-9.

11. An electrolysis method for alternating current induction power supply, wherein, the electrolysis method uses the electrolysis system for alternating current induction power supply according to claim 10, and comprises: connecting the alternating current power source to the magnetic circuits, generating a rotating magnetic field surrounding the electrolytic cell by the magnetic circuits, and making the rotating magnetic field act on an electrolyte in the electrolytic cell to generate an induction direct current, such that the electrolyte is electrolyzed.

FIG. 1

FIG. 2

FIG. 3

11

A

$i_A$ ← A

C'

B'

102

102

B $i_B$ ← B

C

A'

$i_C$ ← C

FIG. 4

122    201

201    201

201    123    121

201

FIG. 5

FIG. 6

## INTERNATIONAL SEARCH REPORT

| International application No. |
|---|
| **PCT/CN2022/127348** |

**A.    CLASSIFICATION OF SUBJECT MATTER**

C25B 9/65(2021.01)i;  C25B 9/015(2021.01)i;  C25B 15/00(2006.01)i;  C25B 9/13(2021.01)i

According to International Patent Classification (IPC) or to both national classification and IPC

**B.    FIELDS SEARCHED**

Minimum documentation searched (classification system followed by classification symbols)

C25B 9/-; C25B 15/-

Documentation searched other than minimum documentation to the extent that such documents are included in the fields searched

Electronic data base consulted during the international search (name of data base and, where practicable, search terms used)

CNABS, CNTXT, CNKI, VEN, WPABSC, USTXT, WOTXT, WEB OF SCIENCE, ENTXTC: 中国石油化工, 中石化, China petroleum chemical, Sinopec, 时振堂, 王美威, 李君, 吴冠霖, 陶丽楠, 孙进, 磁芯, 电磁, 磁场, 线圈, 交流, 交变电流, 转动, 旋转, 直流, 电解, 电化学, electromagnet+, magnet+, coil+, alternat+ current?, AC, direct+ current?, DC, spin+, rotat+, revolv +, electroly+, electrochemistry

**C.    DOCUMENTS CONSIDERED TO BE RELEVANT**

| Category* | Citation of document, with indication, where appropriate, of the relevant passages | Relevant to claim No. |
|---|---|---|
| Y | US 4201635 A (BBC BROWN BOVERI & COMPANY LIMITED) 06 May 1980 (1980-05-06)<br>    description, columns 3-4, and figure 1 | 1-11 |
| Y | CN 107142489 A (INSTITUTE OF ELECTRICAL ENGINEERING, CHINESE ACADEMY OF SCIENCES) 08 September 2017 (2017-09-08)<br>    description, paragraphs 6-35, and figures 1-7 | 1-11 |
| A | CN 108796534 A (JIANG YUNPENG) 13 November 2018 (2018-11-13)<br>    entire document | 1-11 |
| A | US 2018163313 A1 (HYDVILLE SYSTEMS LTD.) 14 June 2018 (2018-06-14)<br>    entire document | 1-11 |
| A | DE 19504632 A1 (DEUTSCHE FORSCHUNGSANSTALT FUER LUFT-UNG RAUMFAHRT E.V.) 14 August 1996 (1996-08-14)<br>    entire document | 1-11 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2023** | **19 January 2023** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/127348**

| Patent document cited in search report | | | Publication date (day/month/year) | Patent family member(s) | | | Publication date (day/month/year) |
|---|---|---|---|---|---|---|---|
| US | 4201635 | A | 06 May 1980 | DE | 2802689 | A1 | 28 June 1979 |
| | | | | NL | 7812283 | A | 25 June 1979 |
| | | | | DE | 7801832 | U1 | 13 September 1979 |
| | | | | FR | 2412347 | A1 | 20 July 1979 |
| CN | 107142489 | A | 08 September 2017 | CN | 107142489 | B | 13 November 2018 |
| CN | 108796534 | A | 13 November 2018 | | None | | |
| US | 2018163313 | A1 | 14 June 2018 | CA | 2829209 | A1 | 26 October 2012 |
| | | | | WO | 2012144960 | A1 | 26 October 2012 |
| | | | | AU | 2012246757 | A1 | 12 September 2013 |
| | | | | AU | 2012246757 | A2 | 14 November 2013 |
| | | | | US | 2014023886 | A1 | 23 January 2014 |
| | | | | EP | 2699714 | A1 | 26 February 2014 |
| | | | | SK | 50222011 | A3 | 14 July 2014 |
| DE | 19504632 | A1 | 14 August 1996 | JP | H08253885 | A | 01 October 1996 |
| | | | | US | 5718819 | A | 17 February 1998 |
| | | | | JP | 2831319 | B2 | 02 December 1998 |
| | | | | DE | 19504632 | C2 | 18 May 2000 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111267982